# EUROPEAN PATENT SPECIFICATION

(11) **EP 3 342 315 B1**
(45) Date of publication and mention of the grant of the patent: **30.12.2020**
(21) Application number: 17161799.6
(22) Date of filing: 20.03.2017
(51) Int. Cl.: A47J 19/02

(54) **JUICER**
ENTSAFTER
CENTRIFUGEUSE

(30) Priority: 30.12.2016 CN 201621482830 U; 24.02.2017 CN 201720180174 U
(43) Date of publication of application: 04.07.2018
(73) Proprietor: Foshan City Shunde Jutian Electric Appliance Co., Ltd., Foshan Guangdong 528305 (CN)
(72) Inventor: LE, Meiyi, Foshan, Guangdong 528305 (CN)
(74) Representative: Dr. Gassner & Partner mbB

(56) References cited:
- WO-A1-2014/157925
- CN-U- 204 483 806
- KR-U- 20160 004 213
- US-A1- 2015 164 129

## Description

### FIELD OF THE INVENTION

The present invention relates to the field of food processing equipment, more particularly to a juicer.

### BACKGROUND OF THE INVENTION

Chinese Utility Model Publication CN 204483806 U discloses an easy-feeding juicer with a vertical screw, which comprises a base provided with a motor, a juice collecting cavity, a screw and an upper cover. Herein, the upper end of the screw is provided with an extracting spiral corresponding to a feeding port of the upper cover. The upper cover is provided with a concave surface connected to the feeding port and used for accommodating and coordinating with the extracting spiral to perform initial extracting and cutting for materials.

U.S. Patent Application Publication US 20150164129 A1 discloses a juicer comprising a rotary brush placed between an inner wall of a housing and an outer wall of a net drum, wherein a screw coupling protrusion or a screw coupling groove is formed on the upper part of the screw and a rotary brush coupling groove or a rotary brush coupling protrusion is formed on the upper part of the rotary brush such that the screw coupling protrusion and the rotary brush coupling groove are coupled or the screw coupling groove and the rotary brush coupling protrusion are coupled in such a manner that the rotary brush is directly rotated by the screw.

PCT Application Publication WO 2014157925 A1 discloses a juice extraction module for extracting juice, and the juice extraction module includes: a container provided with a dreg discharge opening and a juice discharge opening; a net part positioned inside the container; a screw arranged inside the net part for extracting juice; a cover with a material supply opening connected to the top of the container, the lower part of the cover communicating with the supply opening having a guide part for guiding a material for crushing; a working blade formed on the top of the screw so as to face the guide part for crushing the material while pushing the material into the inside of the guide part.

Korean Application Publication KR 20160004213 U discloses a rapid and automatic feeding squeeze type juice extractor comprises a base, a motor arranged in the base, a driving unit arranged in the base, an extrusion screw rod, a squeezing assembly matched with the extrusion screw rod to extrude materials and a feeding assembly; the squeezing assembly comprises a squeezing cavity; a feeding opening is formed in the lateral wall of the squeezing cavity; the feeding assembly comprises a feeding channel communicated with the feeding opening; the juice extractor further comprises a material pushing part for guiding the materials downwards; the material pushing part is arranged corresponding to the feeding opening of the squeezing cavity.

During squeezing by means of existing juicers, when the food is put in too fast, the food residue may be stirred upwards in the feed inlet of the juicer or accumulated at the feed inlet and the threaded cutter as well, which block the feed inlet and the like and obstruct the unsqueezed food from timely entering the squeezing chamber for effective squeezing, thus resulting in poor efficiency of the juicer and also low juice yield of food. Hence, a juicer which meets more processing needs is desired.

### SUMMARY OF THE INVENTION

In order to solve the above technical problems, the present invention aims to provide a juicer which has high efficiency and increased juice yield and effectively prevents the squeezed food from accumulating or stirring upwards.

To this end, the present invention provides a juicer, comprising a base part, a juicer body, a strainer, a threaded cutter and a feed inlet, wherein the base part is provided with a drive shaft, the juicer body is arranged on the base part, the strainer is arranged within the juicer body, the juicer body is covered over with the feed inlet and a squeezing chamber is formed between the feed inlet and the strainer, the threaded cutter is installed inside the squeezing chamber and is connected with the drive shaft, the threaded cutter comprises a screw body and a thread line formed on external surface of the screw body,

wherein a buffer chamber is formed between the upper portion of the threaded cutter and the lower portion of the feed inlet; a pivot joint is arranged at the top of the screw body and is pivotally connected to the inner surface of the lower portion of the feed inlet, and the upper portion of the screw body from bottom to top is tapered at first and then broadened so as to form a radial projecting top.

Optionally, a protruding part is arranged at the lower portion of the feed inlet, protruding along one side thereof, a buffer chamber is formed between the upper portion of the threaded cutter and the protruding part, and the pivot joint is pivotally connected to the top of the protruding part.

Optionally, the feed inlet is arranged at an angle, and the protruding part is arranged on the side where the feed inlet is tilted to.

Optionally, the protruding part is step-shaped and is broadened from top to bottom.

Optionally, an annular step is arranged at the bottom of the pivot joint.

Optionally, the strainer is cone-shaped and is tapered from top to bottom.

Optionally, a cutter is provided on the inner wall of the upper portion of the feed inlet, and a pluggable push-off arm is further provided within the upper portion of the feed inlet, and a guide groove allowing the cutter to insert from its bottom is arranged on the push-off arm at a position opposite the cutter.

Optionally, the screw body is provided at its lower portion with an inner ring part protruding downwards, a rotation axis is arranged inside the screw body, running through the upper surface and lower surface thereof, and a space which opens downwards is formed between the inner ring and the rotation axis, the top of the rotation axis serves as the pivot joint, and the bottom of the rotation axis is connected with the drive shaft by snap-fitting.

Optionally, the screw body is provided with several thread lines.

Optionally, bulges are formed between the several thread lines.

The present invention has advantages as follows:

In the juicer according to the present invention, the buffer chamber is formed between the upper portion of the threaded cutter and the lower portion of the feed inlet. In a case where the food is pushed into the buffer chamber and is squeezed by the threaded cutter, due to the radial projection formed at the top of the screw body and closely fitted with the inner wall of the lower portion of the feed inlet, an isolation area is formed at the lower portion of the feed inlet, thereby very effectively preventing the food being squeezed from splashing around and blocking the squeezing chamber, and preventing the squeezed food from returning to the feed inlet. In addition, in a case where the threaded cutter keeps rotating, the juicer continues cutting, preserving and squeezing the food in the squeezing chamber, due to the buffer chamber, the processing of the food accumulated at the contact region between the feed inlet and the threaded cutter is facilitated, and the food is continuous squeezed. Thus, the food put in place is continuously squeezed into juice and then the juice flows through filtering holes of the strainer into a juice cup, whereby the efficiency of the juicer and the juice yield of food are both increased.

### BRIEF DESCRIPTION OF THE DRAWINGS

Fig. 1 is a schematic drawing of a juicer according to a preferred embodiment of the present invention;
Fig. 2 is a structural drawing of a threaded cutter according to a preferred embodiment of the present invention;
Fig. 3 is a cross-sectional view of a threaded cutter according to a preferred embodiment of the present invention;

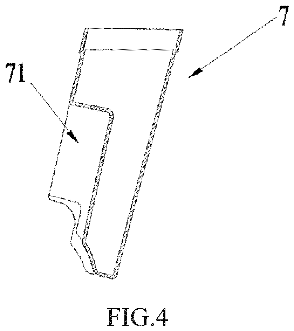

Fig. 4 is a schematic drawing of a push-off arm according to a preferred embodiment of the present invention.

Reference numerals: 1. base part; 2. juicer body; 3. strainer; 4. threaded cutter; 41. screw body; 42. thread line; 43. pivot joint; 431. annular step; 44. radial projecting top; 45. rotation axis; 46. upper portion of the screw body; 5. feed inlet; 51. protruding part; 6. drive shaft; 7. push-off arm; 71. guide groove; 8. cutter.

### DETAILED DESCRIPTION OF ILLUSTRATED EMBODIMENTS

The present invention will be clearly and completely explained below with reference to figures and particular embodiments. It is evident that, the embodiments described herein are to be regarded as illustrative rather than restrictive. The present invention is intended to cover all changes, various modifications and equivalent arrangements included within the principle and scope of the present invention according to the technical essence of the present invention.

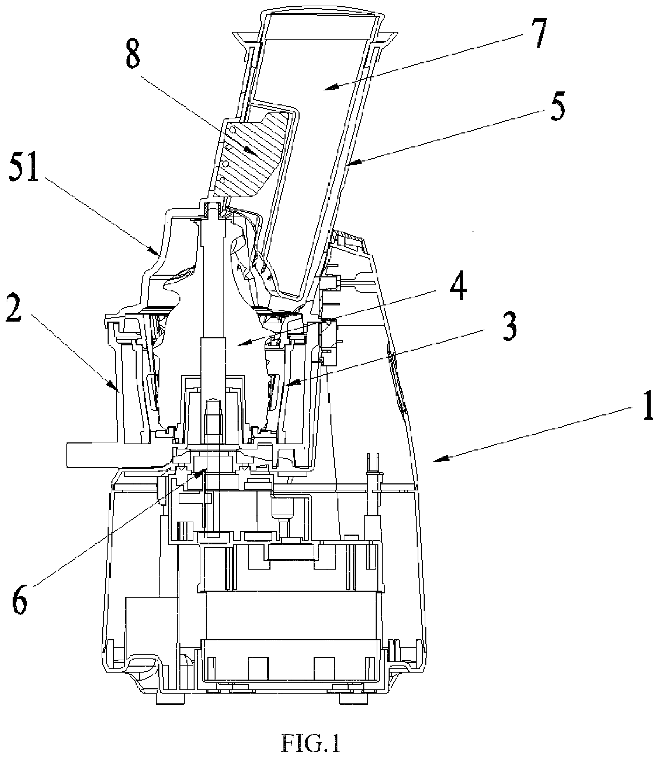

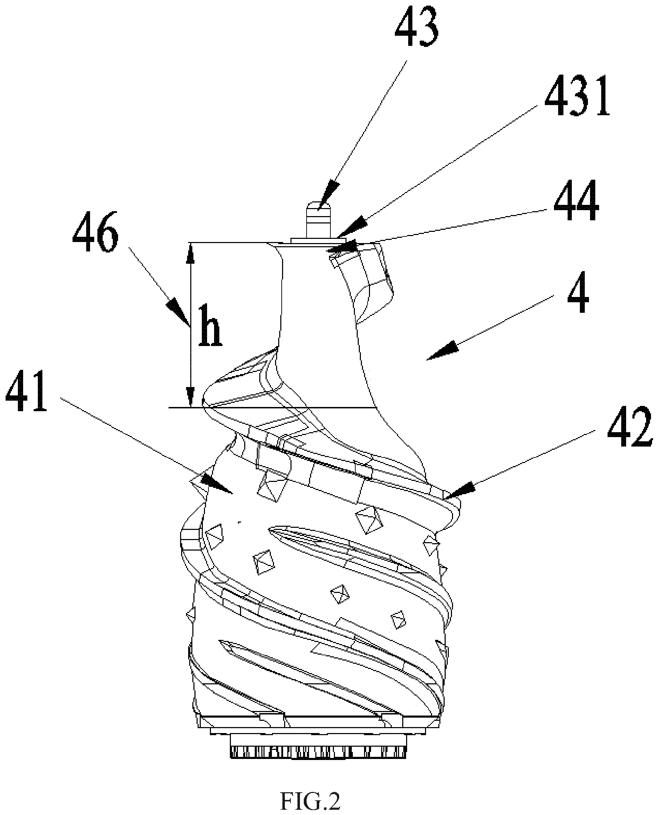

Referring to Figs. 1-3, a juicer according to a preferred embodiment of the present invention comprises a base part 1, a juicer body 2, a strainer 3, a threaded cutter 4, and a feed inlet 5, wherein the base part 1 is provided with a drive shaft 6, the juicer body 2 is arranged on the base part 1, the strainer 3 is arranged within the juicer body 2, the juicer body 2 is covered over with the feed inlet 5 and a squeezing chamber is formed between the feed inlet 5 and the strainer 3, the threaded cutter 4 is installed inside the squeezing chamber and is connected with the drive shaft 6, the threaded cutter 4 comprises a screw body 41 and thread lines 42 formed on external surface of the screw body 41, and a buffer chamber is formed between the upper portion of the threaded cutter 4 and the lower portion of the feed inlet 5; a pivot joint 43 is arranged at the top of the screw body 41 and is pivotally connected to the inner surface of the lower portion of the feed inlet 5, and the upper portion of the screw body from bottom to top is tapered at first and then broadened to form a radial projecting top 44.

The juicer according to the present invention comprises a buffer chamber formed between the upper portion of the threaded cutter 4 and the lower portion of the feed inlet 5. In a case where the food is pushed into the buffer chamber through the feed inlet 5 and is squeezed by the threaded cutter 4, the squeezed food may splash around and block the feed inlet 5 and the like. At this point, due to the radial projection formed at the top of the screw body 41, the radial projecting top 44 and the inner wall of the lower portion of the feed inlet 5 are closely fitted such that an isolation area is formed at the lower portion of the feed inlet 5, which very effectively prevents the food being squeezed from splashing around and blocking the squeezing chamber, and prevents the squeezed food from returning to the feed inlet. Furthermore, in a case where the threaded cutter 4 keeps rotating, the juicer continues cutting, preserving and squeezing the food in the squeezing chamber, thereby facilitating processing of the food accumulated at the contact region between the feed inlet 5 and the threaded cutter 4, and ensuring continuous squeezing of the food due to the buffer chamber. Thus, the food put in place is continuously squeezed into juice and then the juice flows through filtering holes of the strainer into a juice cup, whereby the efficiency of the juicer and the juice yield of food are both increased.

Furthermore, in the present embodiment, a protruding part 51 is arranged at the lower portion of the feed inlet 5, protruding along one side thereof, the buffer chamber is formed between the upper portion of the threaded cutter 4 and the protruding part 51, and the pivot joint 43 is pivotally connected to the top of the protruding part 51. In this way, the buffer chamber is further optimized, ensuring continuous squeezing of the food. The feed inlet 5 is arranged at an angle, which facilitates control of foods in the feed inlet 5 on one hand, and on the other hand facilitates real-time observation of the buffer chamber through the feed inlet 5. The protruding part 51 is arranged on the side where the feed inlet is tilted to. The protruding part 51 is a step-shaped part broadening from top to bottom, which is mainly fitted with the profile of the threaded cutter 4 to avoid uneven squeezing resulted from an oversized upper part of the buffer chamber.

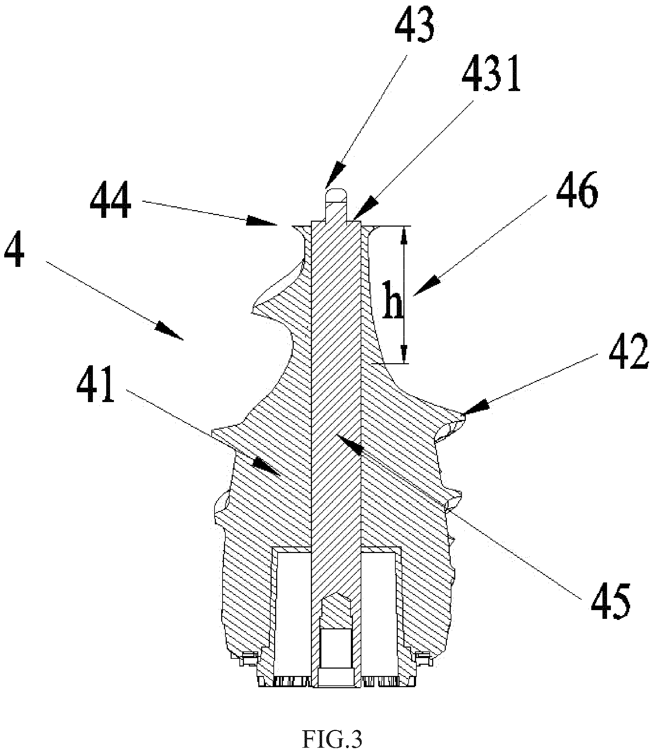

Furthermore, as shown in Fig.3, an annular step 431 is arranged at the bottom of the pivot joint 43 in the present embodiment, so as to avoid a direct contact between the radial projecting top 44 and the inner surface of the feed inlet 5 and thus reduce wear. Moreover, the strainer 3 is tapered from top to bottom so as to fit the protruding part 51 which is a step-shaped part broadening from top to bottom. Thus, in a case where the bottom of the feed inlet 5 and the top of the strainer 3 are closely fitted, an optimized squeezing chamber which is small at the upper end, big in the middle, and gradually gets smaller from the middle to the bottom is completely formed. Such squeezing chamber effectively cooperates with the threaded cutter 4 to cut, preserve and fully squeeze the food. Furthermore, a cutter 8 is provided on the inner wall of the upper portion of the feed inlet 5, and a pluggable push-off arm 7 is further provided within the upper portion of the feed inlet 5. Since the cutter 8 is pre-mounted in the feed inlet 5, the food can be cut into halves by the cutter 8 when it is pushed into the feed inlet 5 by the push-off arm 7, thereby effectively saving much time, in particular for the bigger food which needs precutting (and thus cleaning of the cutter and cutting board) prior to processing by the juicer. A guide groove 71 allowing for the cutter 8 to insert from its bottom is arranged on the push-off arm 7 at a position opposite the cutter 8, thereby avoiding collision between the push-off arm 7 and the cutter 8 and facilitating the cutting cooperation therebetween.

The screw body 41 is provided at its lower portion with an inner ring part protruding downwards, a rotation axis 45 is arranged within the screw body 41, running through its upper surface and lower surface, and a space which opens downwards is formed between the inner ring and the rotation axis 45. The top of the rotation axis 45 is the pivot joint 43, the bottom of the rotation axis 45 is connected with the drive shaft 6 by snap-fitting, so that the threaded cutter 4 and the drive shaft 6 match each other more closely. There is an interval between the bottom of the push-off arm 7 and the top of the threaded cutter 4, ensuring no contact occurs between the threaded cutter 4 and the push-off arm 7 during operation to hinder the operation of the threaded cutter 4. Bulges are formed between the thread lines 42, wherein the bulges are cone-shaped, triangular pyramid shaped, rectangular pyramid shaped, pentagonal pyramid shaped, or hexagonal pyramid shaped, for increasing squeezing efficiency of the threaded cutter 4. The screw body 41 is provided with several thread lines for further improving the squeezing efficiency of the threaded cutter 4 and the juice yield of food.

Thus, in the juicer according to the present invention, the buffer chamber is formed between the upper portion of the threaded cutter 4 and the lower portion of the feed inlet 5. In a case where the food is pushed into the buffer chamber through the feed inlet 5 and is squeezed by the threaded cutter 4, the squeezed food may splash around and block the feed inlet 5 and the like. At this point, due to the radial projection formed at the top of the screw body 41 and closely fitted with the inner wall of the lower portion of the feed inlet 5, an isolation area is formed at the lower portion of the feed inlet 5, which very effectively prevents the food being squeezed from splashing around and blocking the squeezing chamber, and prevents the squeezed food from returning to the feed inlet. Furthermore, in a case where the threaded cutter 4 keeps rotating, the juicer continues cutting, preserving and squeezing the food in the squeezing chamber, thereby facilitating processing of the food accumulated at the contact region between the feed inlet 5 and the threaded cutter 4, and ensuring continuous squeezing of the food by the buffer chamber. Thus, the food put in place is continuously squeezed into juice and then the juice flows through filtering holes of the strainer into a juice cup, whereby the efficiency of the juicer and the juice yield of food are both increased.

All the above are merely the preferred embodiments of the present invention. It should be understood that, those skilled in the art may change or modify the above disclosed technical contents to obtain equivalent embodiments without departing from the scope of the present invention.

## Claims

1. A juicer comprising a base part (1), a juicer body (2), a strainer (3), a threaded cutter (4) and a feed inlet (5), wherein the base part (1) is provided with a drive shaft (6), the juicer body (2) is arranged on the base part (1), the strainer (3) is arranged within the juicer body (2), the juicer body (2) is covered over with the feed inlet (5) and a squeezing chamber is formed between the feed inlet (5) and the strainer (3), the threaded cutter (4) is installed inside the squeezing chamber and is connected with the drive shaft (6), the threaded cutter (4) comprises a screw body (41) and a thread line (42) formed on external surface of the screw body (41)
and a buffer chamber is formed between the upper portion of the threaded cutter (4) and the lower portion of the feed inlet (5); a pivot joint (43) is arranged at the top (46) of the screw body (41) and is pivotally connected to the inner surface of the lower portion of the feed inlet (5),
**characterized in that**
the upper portion of the screw body from bottom to top is tapered at first and then broadened so as to form a radial projecting top (44).

2. The juicer according to claim 1, **characterized in that**: the feed inlet (5) is provided at its lower portion with a protruding part (51) which protrudes along one side thereof, the buffer chamber is formed between the upper portion of the threaded cutter (4) and the protruding part (51), and the pivot joint (43) is pivotally connected to the top of the protruding part (51).

3. The juicer according to claim 2, **characterized in that**: the feed inlet (5) is arranged at an angle, and the protruding part (51) is arranged on the side where the feed inlet (5) is tilted to.

4. The juicer according to claim 2, **characterized in that**: the protruding part (51) is step-shaped and is broadened from top to bottom.

5. The juicer according to anyone of claims 1-4, **characterized in that**: an annular step (431) is arranged at the bottom of the pivot joint (43).

6. The juicer according to anyone of claims 1-4, **characterized in that**: the strainer (3) is cone-shaped and is tapered from top to bottom.

7. The juicer according to anyone of claims 1-4, **characterized in that**: a cutter (8) is provided on the inner wall of the upper portion of the feed inlet (5), a pluggable push-off arm (7) is further provided within the upper portion of the feed inlet (5), and a guide groove (71) which allows the cutter (8) to insert from its bottom is arranged on the push-off arm (7) at a position opposite the cutter (8).

8. The juicer according to anyone of claims 1-4, **characterized in that**: the screw body (41) is provided at its lower portion with an inner ring part protruding downwards, a rotation axis (45) is arranged within the screw body (41), running through the upper surface and lower surface thereof, and a space which opens downwards is formed between the inner ring and the rotation axis (45), the top of the rotation axis (45) serves as the pivot joint (43), and the bottom of the rotation axis (45) is connected with the drive shaft (6) by snap-fitting.

9. The juicer according to anyone of claims 1-4, **characterized in that**: the screw body (41) is provided with thread lines (42).

10. The juicer according to claim 9, **characterized in that**: a bulge is formed between the thread lines (42).

## Patentansprüche

1. Entsafter mit einem Basisteil (1), einem Entsafterkörper (2), einem Sieb (3), einem mit einem Gewinde versehenen Schneidmesser (4) und einem Zuführeinlass (5), wobei das Basisteil (1) mit einer Antriebswelle (6) versehen ist, der Entsafterkörper (2) auf dem Basisteil (1) angeordnet ist, das Sieb (3) innerhalb des Entsafterkörpers (2) angeordnet ist, der Entsafterkörper (2) von dem Zuführeinlass (5) bedeckt ist und eine Quetschkammer zwischen dem Zuführeinlass (5) und dem Sieb (3) ausgebildet ist, das mit dem Gewinde versehene Schneidmesser (4) innerhalb der Quetschkammer angeordnet und mit der Antriebswelle (6) verbunden ist, wobei das mit dem Gewinde versehene Schneidmesser (4) einen Schraubenkörper (41) und einen an der Außenfläche des Schraubenkörpers (41) ausgebildeten Gewindegang (42) umfasst,
wobei eine Pufferkammer zwischen dem oberen Abschnitt des mit dem Gewinde versehenen Schneidmessers (4) und dem unteren Abschnitt des Zuführeinlasses (5) gebildet ist; ein Drehgelenk (43) ist am oberen Ende (46) des Schraubenkörpers (41) angeordnet und drehbar mit der Innenfläche des unteren Abschnitts des Zuführeinlasses (5) verbunden,
**dadurch gekennzeichnet, dass**
der obere Teil des Schraubenkörpers sich von unten nach oben zunächst verjüngt und dann verbreitert, so dass ein radial abstehendes Oberteil (44) gebildet ist.

2. Entsafter nach Anspruch 1, **dadurch gekennzeichnet, dass**: der Zuführeinlass (5) an seinem unteren Abschnitt mit einem vorstehenden Teil (51) versehen ist, der entlang einer Seite davon vorsteht, die Pufferkammer zwischen dem oberen Abschnitt des mit einem Gewinde versehenen Schneidmessers (4) und dem vorstehenden Teil (51) gebildet ist, und das Drehgelenk (43) drehbar mit der Oberseite des vorstehenden Teils (51) verbunden ist.

3. Entsafter nach Anspruch 2, **dadurch gekennzeichnet, dass**: der Einfüllstutzen (5) schräg angeordnet ist, und der vorstehende Teil (51) auf der Seite angeordnet ist, zu der der Einfüllstutzen (5) geneigt ist.

4. Entsafter nach Anspruch 2, **dadurch gekennzeichnet, dass**: der vorstehende Teil (51) stufenförmig ist und von oben nach unten verbreitert ist.

5. Entsafter nach einem der Ansprüche 1 bis 4, **dadurch gekennzeichnet, dass**: unten am Drehgelenk (43) eine ringförmige Stufe (431) angeordnet ist.

6. Entsafter nach einem der Ansprüche 1 bis 4, **dadurch gekennzeichnet, dass**: das Sieb (3) kegelförmig ist und sich von oben nach unten verjüngt.

7. Entsafter nach einem der Ansprüche 1 bis 4, **dadurch gekennzeichnet, dass**: eine Schneideinrichtung (8) an der Innenwand des oberen Teils des Zuführeinlasses (5) vorgesehen ist, ein steckbarer Abstoßarm (7) ferner innerhalb des oberen Teils des Zuführeinlasses (5) vorgesehen ist, und eine Führungsnut (71), die es ermöglicht, die Schneideinrichtung (8) von ihrem Boden her einzufügen, an dem Abstoßarm (7) an einer der Schneideinrichtung (8) gegenüberliegenden Stelle angeordnet ist.

8. Entsafter nach einem der Ansprüche 1 bis 4, **dadurch gekennzeichnet, dass**: der Schraubenkörper (41) an seinem unteren Abschnitt mit einem nach unten vorstehenden Innenringteil versehen ist, innerhalb des Schraubenkörpers (41) eine Drehachse (45) angeordnet ist, die durch dessen Ober- und Unterseite verläuft, und zwischen dem Innenring und der Drehachse (45) ein sich nach unten öffnender Raum gebildet ist, die Oberseite der Drehachse (45) als Drehgelenk (43) dient, und die Unterseite der Drehachse (45) mit der Antriebswelle (6) durch Schnappverbindung verbunden ist.

9. Entsafter nach einem der Ansprüche 1 bis 4, **dadurch gekennzeichnet, dass**: der Schraubenkörper (41) mit Gewindegängen (42) versehen ist.

10. Entsafter nach Anspruch 9, **dadurch gekennzeichnet, dass**: zwischen den Gewindegängen (42) eine Wölbung gebildet ist.

## Revendications

1. Centrifugeuse comprenant une partie de base (1), un corps de centrifugeuse (2), un filtre (3), un couteau fileté (4) et une entrée d'alimentation (5), en ce que la partie de base (1) comporte un arbre d'entraînement (6), le corps de centrifugeuse (2) est disposé sur la partie de base (1), le filtre (3) est disposé à l'intérieur du corps de centrifugeuse (2), le corps de centrifugeuse (2) est recouvert par l'entrée d'alimentation (5) et une chambre de pressage est formée entre l'entrée d'alimentation (5) et le filtre (3), le couteau fileté (4) est placé à l'intérieur de la chambre de pressage et est relié à l'arbre d'entraînement (6), le couteau fileté (4) comprend un corps de vis (41) et une ligne de filetage (42) formée sur une surface externe du corps de vis (41)
et une chambre tampon est formée entre la partie supérieure du couteau fileté (4) et la partie inférieure de l'entrée d'alimentation (5) ; une articulation à pivot (43) est disposée au niveau de la partie supérieure (46) du corps de vis (41) et est reliée de manière pivotante à la surface intérieure de la partie inférieure de l'entrée d'alimentation (5),
**caractérisée en ce que**
la partie supérieure du corps de vis de bas en haut est d'abord conique puis élargie de manière à former une partie supérieure en saillie radiale (44).

2. Centrifugeuse selon la revendication 1, **caractérisée en ce que** l'entrée d'alimentation (5) est pourvue au niveau de sa partie inférieure d'une partie en saillie (51) qui fait saillie le long d'un de ses côtés, la chambre tampon est formée entre la partie supérieure du couteau fileté (4) et la partie en saillie (51), et l'articulation à pivot (43) est reliée de manière pivotante à la partie supérieure de la partie en saillie (51).

3. Centrifugeuse selon la revendication 2, **caractérisée en ce que** l'entrée d'alimentation (5) est disposée au niveau d'un angle, et la partie en saillie (51) est disposée sur le côté où l'entrée d'alimentation (5) est inclinée.

4. Centrifugeuse selon la revendication 2, **caractérisée en ce que** la partie en saillie (51) est en forme de gradin et s'élargit de haut en bas.

5. Centrifugeuse selon l'une des revendications 1 à 4, **caractérisée en ce qu'**un étage annulaire (431) est disposé au niveau de la partie inférieure de l'articulation à pivot (43).

6. Centrifugeuse selon l'une des revendications 1 à 4, **caractérisée en ce que** le filtre (3) est en forme de cône et est conique de haut en bas.

7. Centrifugeuse selon l'une des revendications 1 à 4, **caractérisée en ce qu'**un couteau (8) est disposé sur la paroi intérieure de la partie supérieure de l'entrée d'alimentation (5), un bras de poussée enfichable (7) est en outre prévu dans la partie supérieure de l'entrée d'alimentation (5), et une rainure de guidage (71) permettant l'insertion du couteau (8) à partir de sa partie inférieure est disposée sur le bras de poussée (7) à une position opposée au couteau (8).

8. Centrifugeuse selon l'une des revendications 1 à 4, **caractérisée en ce que** le corps de vis (41) est prévu au niveau de sa partie inférieure avec une partie annulaire intérieure faisant saillie vers le bas, un axe de rotation (45) est disposé dans le corps de vis (41), passant par la surface supérieure et la surface inférieure de celui-ci, et un espace qui s'ouvre vers le bas est formé entre l'anneau intérieur et l'axe de rotation (45), la partie supérieure de l'axe de rotation (45) sert d'articulation à pivot (43), et la partie inférieure de l'axe de rotation (45) est reliée à l'arbre d'entraînement (6) par encliquetage.

9. Centrifugeuse selon l'une des revendications 1 à 4, **caractérisée en ce que** le corps de vis (41) comporte trois lignes de filetage (42).

10. Centrifugeuse selon la revendication 9, **caractérisée en ce qu'**un renflement est formé entre les lignes de filetage (42).
